# EUROPÄISCHE PATENTSCHRIFT

(11) **EP 2 787 222 B1**
(45) Veröffentlichungstag und Bekanntmachung des Hinweises auf die Patenterteilung: **31.05.2017**
(21) Anmeldenummer: 14001157.8
(22) Anmeldetag: 28.03.2014
(51) Int. Cl.: F16B 39/26, F16B 39/32

(54) **Vorrichtung und Anordnung zur Verriegelung von schraubbaren Elementen**
Device and assembly for locking screwable elements
Dispositif et agencement de verrouillage d'éléments filetés

(30) Priorität: 04.04.2013 DE 102013103345
(43) Veröffentlichungstag der Anmeldung: 08.10.2014
(73) Patentinhaber: KNORR-BREMSE Systeme für Nutzfahrzeuge GmbH, 80809 München (DE)
(72) Erfinder: Derouault, Sylvain, F-14100 Hermival les Vaux (FR); Hericher, Stéphane, F-14670 Basseneville (FR)

(56) Entgegenhaltungen:
- JP-A- 2009 092 229
- US-A- 5 597 278

## Beschreibung

Die vorliegende Erfindung betrifft eine Vorrichtung und eine Anordnung zur Verriegelung von schraubbaren Elementen, und bezieht sich insbesondere auf eine in Schraubverbindungen integrierte und/oder integrierbare Vorrichtung zur Verhinderung eines selbsttätigen Lösens einer Schraubverbindung, Schraube oder Mutter und/oder zur Verhinderung eines unerwünschten Änderns der Einstellung einer Stellschraubanordnung.

In verschiedensten Bereichen der Technik werden Elemente wie etwa Gehäuseteile, Anbauteile, Komponenten und/oder ganze Baugruppen mittels Schraubverbindungen an anderen Teilen eines Gesamtaufbaus in einer vorbestimmten Lage festgelegt. Ferner müssen häufig Stellschraubanordnungen grundeingestellt und danach fixiert werden, aber später leichtgängig verstellbar bleiben. Häufig soll nach der Montage verhindert werden, dass sich Schraubverbindungen selbsttätig lösen oder Grundeinstellungen selbsttätig ändern können.

Bislang wird dies, unterstützt durch notwendigerweise einzuhaltende Anzugsdrehmomente, beispielsweise durch Verwendung geeigneter Unterlegscheiben, durch Verwendung spezieller Klebstoffe, die an Gewinden angreifen, und/oder Versehen einer Schraubverbindung mit Bohrungen und Vorsehen von Splinten in solchen Bohrungen und dergleichen erreicht.

Solche Maßnahmen sind unter anderem dahingehend nachteilig, dass ein Verhindern eines selbsttätigen Lösens teilweise dennoch nicht sichergestellt werden kann, beispielsweise in Umgebungen, in welchen eine Schraubverbindung Erschütterungen und/oder Vibrationen ausgesetzt ist, oder die Sicherungswirkung einem bedarfsweise leichten Lösen der Schraubverbindung entgegenwirkt, beispielsweise wenn ein verwendeter Klebstoff nur ein mühsames Lösen erlaubt oder ein stramm bzw. fest sitzender und/oder korrodierter Splint nur mühsam aus seiner Bohrung zu entfernen ist.

Insbesondere im Bereich des Fahrzeugbaus aber ist es wichtig, dass sich in sicherheitsrelevanten Bereichen Schraubverbindungen beispielsweise zwischen Inspektions- und Wartungsintervallen nicht selbsttätig lockern, lösen und/oder verstellen. Außerdem soll eine einfache Sichtkontrolle für eine Feststellung eines ordnungsgemäßen Zustands der Schraubverbindung, beispielsweise im Rahmen von routinemäßigen Prüfungen durch einen Fahrer eines Fahrzeugs vor, während und/oder nach einer Fahrt möglich sein. Andererseits sollen für einen wirtschaftlichen Fahrzeugbetrieb Wartungsarbeiten und/oder Einstellarbeiten durch Sicherungsmechanismen nicht unnötig teuer oder kompliziert werden.

In US 5 597 278 A wird eine Vorrichtung zur Verriegelung eines schraubbaren Elements beschrieben, aufweisend zumindest zwei Verriegelungsabschnitte, die sich mit einer Längsrichtung in einer jeweils lotrechten zweiten Ebene erstrecken, wobei jeder Verriegelungsabschnitt beinhaltet: Einen Steg, der einen Stegteil mit einer vorbestimmten Krümmung aufweist, um den und/oder an dem der Verriegelungsabschnitt bei Einwirken einer Druckkraft von außen in der zweiten Ebene auslenkbar ist; einen Druckaufnahmeabschnitt zur Aufnahme der Druckkraft, der sich in der Längsrichtung an den Steg anschließt und mit einer Fläche in einer zu der zweiten Ebene lotrechten dritten Ebene angeordnet ist; und einen hakenförmigen Endabschnitt, der sich in der zweiten Ebene in der Längsrichtung an den Druckaufnahmeabschnitt anschließt, in druckkraft-beaufschlagter Auslenkung des Verriegelungsabschnitts in eine Entriegelungsstellung verfährt, und druckkraft-unbeaufschlagt selbststellend in eine Verriegelungsstellung zurückkehrt.

Der Erfindung liegt die Aufgabe zugrunde, eine Vorrichtung zur Verriegelung von schraubbaren Elementen zu schaffen, mit der eine Schraubverbindung kostengünstig und bei einfacher Handhabung sicher verriegelbar und leicht wieder entriegelbar ist.

Diese Aufgabe wird erfindungsgemäß durch eine Vorrichtung zur Verriegelung schraubbarer Elemente mit den in Anspruch 1 angegebenen Merkmalen und durch eine Anordnung und/oder ein System zur Verriegelung schraubbarer Elemente mit den in Anspruch 8 angegebenen Merkmalen gelöst. Vorteilhafte Weiterbildungen der Erfindung sind Gegenstand der beigefügten Unteransprüche.

### Offenbarung der Erfindung

Die Erfindung sieht damit im Kern eine integrierte Schraubverriegelung oder Schraubenverriegelung vor, die als zumindest ein zusätzliches Teil an bzw. in einem Kopfabschnitt einer Schraube, einer Mutter, einer Gewindeanordnung wie etwa einer Gewindespindel eines Federspeicherbremszylinders oder dergleichen verbaut wird. Die integrierte Schraubenverriegelung weist einen elastisch oder federnd verformbaren, bügel- oder flügelförmigen Abschnitt auf, der in einem entspannten Zustand (einer Ruhelage) größer bzw. zumindest in einer Breitenrichtung (einer Richtung lotrecht zur axialen Richtung der Schraubverbindung) ausladender baut als ein auf die Schraube, Mutter oder Gewindeanordnung passendes Werkzeug zum Festlegen, Verstellen und/oder Lösen der Schraube, Mutter oder Gewindeanordnung, beispielsweise eine Steckschlüsselvorrichtung wie etwa eine Nuss oder dergleichen.

Zum Festlegen, Verstellen oder Anziehen der Schraube, Mutter oder Gewindeanordnung wird das Werkzeug auf den Kopfabschnitt gesetzt und dabei auch über den bügel- oder flügelförmigen Abschnitt geführt. Da das Innenmaß des Werkzeugs kleiner ist als die Ausdehnung des bügel- oder flügelförmigen Abschnitts, wird dadurch der bügel- oder flügelförmige Abschnitt auf das Innenmaß des Werkzeugs zusammengedrückt, d. h. mit einer gewissen Spannung elastisch auf eine kleinere Ausdehnung verformt. Dadurch wird der bügel- oder flügelförmige Abschnitt in einen nicht rastenden Zustand versetzt und kann zusammen mit der Schraube, Mutter oder Gewindeanordnung verdreht werden.

Wird die Schraube, Mutter oder Gewindeanordnung nun durch Verdrehen des Werkzeugs in vorgesehener Weise festgelegt, beispielsweise mit einem vorbestimmten Anzugsdrehmoment gegen ein Lagerteil angezogen, dreht sich die Schraubenverriegelung im Kopfabschnitt bis in eine gewünschte Endlage mit. Am Lagerteil ist ein Einrastabschnitt oder Verriegelungsabschnitt bzw. eine solche Einrichtung angeordnet, der bzw. die eine Vielzahl von Ausnehmungen aufweist, die in ihren Abmessungen und Abständen so bemessen sind, dass Endabschnitte der integrierten Schraubenverriegelung bzw. Enden des bügel- oder flügelförmigen Abschnitts bei Erreichen der gewünschten Endlage geeignet fein auflösend und rastend in sie eingreifen können.

Der Einrastabschnitt kann dabei direkt in das Lagerteil eingeformt sein, beispielsweise durch geeignete einstückige Bearbeitung des Lagerteils, in eine Ausnehmung des Lagerteils eingepresst sein oder auf diesem aufliegen, oder als separates Element etwa in scheibenartiger Form oder dergleichen bereitgestellt sein, wenn ein die Verdrehverhinderungswirkung bzw. Sicherungswirkung bereitstellender Reib- oder Kraftschluss zwischen zugeordneten Oberflächen des Lagerteils und der Scheibe, beispielsweise durch von der Scheibenform in das Lagerteil verlaufende bolzen- oder zapfenartige Ausformungen oder dergleichen, geeignet und hinreichend hergestellt wird.

Wird sodann in der gewünschten Endlage das Werkzeug von dem Kopfabschnitt und damit von dem bügel- oder flügelförmigen Abschnitt entfernt, verformt sich der bügel- oder flügelförmige Abschnitt elastisch federnd und selbsttätig zurück in seine entspannte Ruhelage, und greifen dabei seine Enden in jeweils nächstliegende Ausnehmungen des Einrastabschnitts ein.

Da der bügel- oder flügelförmige Abschnitt verdrehsicher, beispielsweise in einem geeigneten Spalt, an dem Kopfabschnitt der Schraube, Mutter oder Gewindeanordnung angeordnet ist und ohne Einwirkung des Werkzeugs der bügel- oder flügelförmige Abschnitt in seiner entspannten Ruhelage in Eingriff mit den Ausnehmungen des Einrastabschnitts verharrt, wird in diesem Zustand ein selbsttätiges Lösen oder Verstellen der Schraubverbindung auch unter erschwerten Bedingungen sicher verhindert.

Soll die Schraubverbindung wieder gelöst werden, ist die integrierte Schraubenverriegelung an dem bügel- oder flügelförmigen Abschnitt erneut derart verformbar, dass sie bei bzw. durch Aufsetzen des Werkzeugs auf den Kopfabschnitt, d. h. durch eine erneute Druckeinwirkung vermittels des Werkzeugs, wieder aus dem rastenden Eingriff mit dem Einrastabschnitt bewegt wird und ein Verdrehen des schraubbaren Kopfabschnitts wieder erlaubt.

Insbesondere ist der bügel- oder flügelförmige Abschnitt so ausgestaltet, dass Werkzeuge mit Normweiten die Verformung bei einem Festlegen und/oder Lösen erzeugen und somit kein spezielles Werkzeug notwendig ist.

Eine Anordnung aus zur verdrehsicheren Aufnahme des Verriegelungsteils geeignet ausgeformtem Kopfabschnitt eines schraubbaren Teils, bügel- oder flügelförmigem Abschnitt und Einrastabschnitt bildet insgesamt ein integriertes Schraubverriegelungssystem oder ein System bzw. Anordnung zur Verriegelung von schraubbaren Elementen.

Damit wird die Aufgabe gelöst durch eine Vorrichtung zur Verriegelung eines schraubbaren Elements, gekennzeichnet durch einen Ringteil mit einem Umfang in einer ersten Ebene; zumindest zwei Verriegelungsabschnitte, die sich von dem Ringteil ausgehend mit einer Längsrichtung in einer zur Umfangsebene des Ringteils jeweils lotrechten zweiten Ebene erstrecken, wobei jeder Verriegelungsabschnitt beinhaltet: einen Steg, der in der zweiten Ebene den Verriegelungsabschnitt mit dem Ringteil verbindet und einen Stegteil mit einer vorbestimmten Krümmung aufweist, um den und/oder an dem der Verriegelungsabschnitt bei Einwirken einer Druckkraft von außen in der zweiten Ebene auslenkbar ist; einen Druckaufnahmeabschnitt zur Aufnahme der Druckkraft, der sich in der Längsrichtung an den Steg anschließt und mit einer Fläche in einer zu der zweiten Ebene lotrechten dritten Ebene angeordnet ist; und einen hakenförmigen Endabschnitt, der sich in der zweiten Ebene in der Längsrichtung an den Druckaufnahmeabschnitt anschließt, in druckkraft-beaufschlagter Auslenkung des Verriegelungsabschnitts in eine Entriegelungsstellung verfährt, und druckkraft-unbeaufschlagt selbststellend in eine Verriegelungsstellung zurückkehrt.

Vorteilhaft ist die Vorrichtung somit ein leichtes, vorzugsweise einstückiges, elastisch federnd verformbares und dreidimensionales Teil, das kostengünstig herzustellen ist und bei dem der Ringteil in einer ersten Ebene liegt, sich der Verriegelungsflügel in einer zweiten, zu der ersten Ebene lotrechten oder orthogonalen Ebene erstreckt, und im Wesentlichen die Gleitfläche(n) des Druckaufnahmeabschnitts, über welche ein Werkzeug gleitend aufsetzt, in einer zu der ersten Ebene und zu der zweiten Ebene lotrechten oder orthogonalen dritten Ebene liegen. "Im Wesentlichen" soll hier bedeuten, dass die Gleitfläche des Druckaufnahmeelements in einer Ebene parallel zu der Seitenoberfläche des schraubbaren Elements liegt und der Umfang der Aufgleitteilfläche ebenfalls in Ebenen parallel zu der Seitenoberfläche liegt, die Aufgleitteilfläche selbst aber geringfügig gegen die Gleitfläche geneigt ist und sich damit nicht vollständig exakt in deren Ebene befindet.

Bevorzugt erstrecken sich jeweils zumindest zwei Verriegelungsabschnitte diametral gegenüberliegend von dem Ringteil nach außen hin.

Eine Vorrichtung mit zwei Verriegelungsabschnitten ist aufgrund ihrer Symmetrieeigenschaften besonders effizient herzustellen und leicht anzubringen. Eine Vorrichtung mit mehr als zwei Verriegelungsabschnitten stellt dementsprechend mehr Verriegelungspositionen bereit und ist für Anwendungen vorteilhaft, bei welchen höhere Verdrehsicherungskräfte bzw. eine bessere Verdrehsicherungswirkung erwünscht ist.

Weiter bevorzugt ist an dem sich an dem Ringteil befindenden Ende des Stegs zumindest ein zu der Umfangsebene des Ringteils beabstandetes Auflager ausgebildet.

Ein solches Auflager definiert vorteilhaft eine vorbestimmte Position der Vorrichtung und damit die maximale Längenausdehnung jedes Verriegelungsabschnitts im Benutzungszustand, die wiederum die Lage der Verriegelungsstellung definiert. Dadurch sind positionelle Beziehungen in der Umgebung einfacher auslegbar.

Außerdem bevorzugt bildet der Ringteil einen elastischen und nicht geschlossenen Ring mit einem offenen Abschnitt, weist der nicht geschlossene Ring in einer Ruhelage einen vorbestimmten Durchmesser auf, und erzeugt er außerhalb der Ruhelage eine auf eine Rückkehr in die Ruhelage hin wirkende Rückstellkraft.

Hierdurch kann vorteilhaft die Verriegelungsvorrichtung durch leichtes Zusammendrücken des offenen Ringteils auf einen Durchmesser kleiner als den einer Öffnung, etwa einer Bohrung in einem schraubbaren Element, in welche die Verriegelungseinrichtung eingesetzt werden soll, leicht in der Öffnung platziert werden. Wird der Ringteil sodann freigegeben, entspannt und weitet er sich selbsttätig rückstellend wieder auf, und verspannt dadurch die Verriegelungsvorrichtung automatisch zentriert und herausfallsicher gegen die Innenwandung der Öffnung. In der Gegenrichtung kann durch leichtes Aufweiten des offenen Ringteils auf einen Durchmesser größer als den eines rundförmigen Anbringungsteils, etwa einer Führungsstange, welche durch den Ringteil verlaufen soll, leicht um den Anbringungsteil gelegt werden. Wird der Ringteil sodann freigegeben, entspannt und zieht er sich selbsttätig rückstellend wieder zusammen, und spannt dadurch die Verriegelungsvorrichtung, gegebenenfalls in einer Art Ringnut an dem Anbringungsteil, ortsfest und verrutschgehemmt um den Anbringungsteil.

Bevorzugt ist der Stegteil mit vorbestimmter Krümmung derart zwischen flächigen Abschnitten des Verriegelungsabschnitts ausgeformt, dass druckkraft-beaufschlagt ein Auslenken nur des in Längsrichtung auf den Stegteil folgenden Teils des Verriegelungsabschnitts erfolgt und dieser Teil dabei in der zweiten Ebene unverformt bleibt.

Vorteilhaft wird dadurch bei der Benutzung erreicht, dass eine Verformung der Vorrichtung nur an dem gekrümmten Stegteil, d. h. im Wesentlichen um einen Zentrumspunkt des Krümmungsradius, erfolgt. Ist der gekrümmte Stegteil geeignet elastisch ausgelegt, wird vermieden, dass sich die übrigen Abschnitte der Vorrichtung, insbesondere die Verriegelungswirkung bereitstellende untere Teil des Verriegelungsabschnitts, ebenfalls biegeverformen. Dadurch werden die Positionierung und die Verriegelungswirkung der Vorrichtung durch deren Verformung nicht beeinträchtigt.

Auch bevorzugt weist der Druckaufnahmeabschnitt in Längsrichtung des Verriegelungsabschnitts eine vorbestimmten Länge auf, verläuft entlang dieser vorbestimmten Länge die Fläche in die dritte Ebene, ist die Fläche in eine in Höhenrichtung oberteilige Aufgleitteilfläche und eine unterteilige Gleitfläche unterteilt, und ist die Aufgleitteilfläche gegen die Gleitfläche in einem vorbestimmten Winkel zu dem Ringteil hin geneigt.

Vorteilhaft wird hierdurch eine funktionelle Dreidimensionalität der Vorrichtung geschaffen, die bei kleinstmöglichen Abmessungen und damit kleinstmöglichem Maßzuwachs gegenüber einem schraubbaren Element ohne Vorrichtung eine gute Druckkrafteinleitung in die Vorrichtung sowie deren Umsetzung in eine Auslenkung des hakenförmigen Endabschnitts bei gleichzeitig zuverlässiger Verriegelungswirkung bereitstellt.

Noch bevorzugt ist der hakenförmige Endabschnitt an einem unteren Ende des Druckaufnahmeabschnitts beginnend U-förmig ausgeformt, und ist das von dem Druckaufnahmeabschnitt entfernte Schenkelende des hakenförmigen Endabschnitts verkürzt und weist es an seiner Unterseite einen zu der Längsrichtung in einem vorbestimmten Winkel schräg verlaufenden Abschnitt auf.

Die U-förmige Ausformung erlaubt vorteilhaft eine verbesserte Sicherheit gegen Herausfallen der eingesetzten Vorrichtung und zudem eine kleiner bauende Bauform bei gleichzeitig verbesserter Eingriffgestaltung am Verriegelungsort.

Eine Anordnung zur Verriegelung eines schraubbaren Elements beinhaltet die vorstehend aufgezeigte Vorrichtung, das schraubbare Element, wobei das schraubbare Element in seiner Oberfläche zumindest eine Ausnehmung aufweist, welche die Vorrichtung und/oder abschnittsweise den Verriegelungsabschnitt verdrehsicher aufnimmt, und eine Einrasteinrichtung außerhalb der Vorrichtung und des schraubbaren Elements, die positionell dem hakenförmigen Endabschnitt der Vorrichtung so zugeordnet ist, dass der hakenförmige Endabschnitt im Verriegelungszustand der Anordnung rastend in eine Ausnehmung in der Einrasteinrichtung eingreift.

Hier bevorzugt wird, dass die Einrasteinrichtung ringförmig in einem das schraubbare Element führende und/oder aufnehmenden Lagerteil angeordnet ist und entlang der Ringform eine Vielzahl von Ausnehmungen in vorbestimmten Abständen voneinander aufweist, ein ringförmiges Scheibenelement vorgesehen ist, das auf der Einrasteinrichtung aufliegend die Vielzahl von Ausnehmungen oberseitig abdeckt, an einem Innenumfang eine Wegbegrenzung für den hakenförmigen Endabschnitt nach außen bildet, und in Zusammenwirkung mit der Rückstellkraft des Verriegelungsabschnitts in die Ruhelage einer druckkraft-unbeaufschlagten Entriegelung entgegenwirkt, das schraubbare Element in Längsrichtung und korrespondierend zu der U-Form des hakenförmigen Endabschnitts eine umlaufend wannenförmige Ausnehmung zur Aufnahme des hakenförmigen Endabschnitts in dessen druckkraft-beaufschlagter Entriegelungsstellung aufweist, und die Außenfläche des schraubbaren Elements in Längsrichtung so zu einem innenseitigen Profil des Verriegelungsabschnitts beabstandet ist, dass ausreichend Raum für die Auslenkung des Verriegelungsabschnitts in die druckkraft-beaufschlagte Entriegelungsstellung bereitgestellt ist.

Auch bevorzugt weist das schraubbare Element oberseitig zentriert eine rundförmige Öffnung zur Aufnahme des Ringteils auf, wobei ein Durchmesser der Öffnung derart kleiner als der vorbestimmte Durchmesser des Ringteils in Ruhelage ist, dass sich ein in der Öffnung aufgenommener Ringteil herausfallsicher in der Öffnung verspannt.

Vorteilhaft ist auch, wenn die Tiefe der Ausnehmung in der Oberfläche des schraubbaren Elements und das Auflager an dem sich an dem Ringteil befindenden Ende des Stegs derart in Zuordnung sind, dass der hakenförmige Endabschnitt der Vorrichtung und die Ausformung in dem Einrastabschnitt in Höhenrichtung positionell korrespondieren.

Die Anordnung bildet damit vorteilhaft ein definiert zusammenwirkendes System, bei dem positionelle Beziehungen so zueinander passend ausgelegt sind, dass ein Verriegelungsabschnitt einer in die Ausnehmung des schraubbaren Elements eingesetzten Vorrichtung ohne weiteres mit einer Ausnehmung in der Einrasteinrichtung korrespondiert.

Auch bevorzugt wird, dass der Abstand zweier Ausnehmungen derart gewählt ist, dass in einem druckkraft-unbeaufschlagten Zustand ausgehend von einer erreichten Endposition des schraubbaren Elements ein zwischen zwei Ausnehmungen liegendes hakenförmiges Ende bei Einwirken einer äußeren Kraft selbsttätig in die jeweils nächstliegende Ausnehmung rastend eingreift. Vorteilhaft kann dadurch in Fällen, in welchen an einer Endposition des schraubbaren Elements ein hakenförmiges Element auf einem Steg zwischen zwei Ausnehmungen zu liegen kommt, die Verriegelungswirkung selbsttätig eintreten, wenn ausreichend starke Erschütterungen auftreten, die das schraubbare Element und damit die Verriegelungsvorrichtung um den dazu notwendigen Weg weiterdrehen. Bei manueller Betätigung des schraubbaren Elements kann somit zum einen eine Endkontrolle bezüglich des Vorhandenseins der Verriegelungswirkung entfallen, und zum anderen das schraubbare Element in eine beliebig exakte - auch verriegelungslose - Stellung gebracht werden, da im Bedarfsfall umgehend eine automatische Verriegelung in unmittelbarer Nähe dieser Stellung erfolgt.

Hierbei können vorteilhaft entlang eines Umfangs der Einrasteinrichtung die Vielzahl von Ausnehmungen gleich beabstandet angeordnet sein.

Dadurch wird die Herstellung der Einrastvorrichtung einfach gehalten, und kann durch geeignete Abstandswahl dennoch ein im Hinblick auf eine Sollstellung ausreichend exaktes und gleichzeitig verriegeltes Halten des schraubbaren Elements erzielt werden.

Alternativ kann es vorteilhaft sein, wenn entlang eines Umfangs der Einrasteinrichtung die Vielzahl von Ausnehmungen ungleich beabstandet angeordnet sind, wobei in einem Abschnitt des Umfangs, in dem sich eine vorbestimmte Position des schraubbaren Elements befindet, der Abstand zwischen zwei benachbarten Ausnehmungen kleiner ist als der Abstand zwischen zwei benachbarten Ausnehmungen in anderen Abschnitten des Umfangs.

Eine abschnittsweise Erhöhung und/oder Verringerung der Auflösung der Verriegelungswirkung ist insbesondere in Fällen vorteilhaft, in welchen ein Abweichen des schraubbaren Elements von einer vorbestimmten Grund- oder Sollstellung möglichst gering zu halten ist.

### Zeichnung

Die Erfindung wird nachstehend anhand eines Ausführungsbeispiels unter Bezugnahme auf die beigefügte Zeichnung näher beschrieben. Es zeigen:
- Fig.1: eine Querschnittsdarstellung eines bekannten Federspeicherbremszylinders mit einer Notlöseeinrichtung;
- Fig.2: einen vergrößerten Ausschnitt der Notlöseeinrichtung von Fig.1, der anstelle der in Fig. 1 gezeigten Anordnung eine Vorrichtung und eine Anordnung bzw. ein System zur Verriegelung schraubbarer Elemente gemäß einer bevorzugten Ausführungsform der Erfindung;
- Fig. 3A bis 3C: Ansichten eines Verriegelungselements gemäß der bevorzugten Ausführungsform der Erfindung, wobei Fig. 3A eine Aufsicht auf das Verriegelungselement darstellt, Fig. 3B eine zu Fig. 3A korrespondierende Seitenansicht des Verriegelungselements darstellt, und Fig. 3C eine perspektivische Ansicht des Verriegelungselements abbildet; und
- Fig. 4: eine vereinfachte perspektivische Darstellung eines aus einem schraubbaren Teil, einem Verriegelungselement und einem Einrastabschnitt bestehenden Systems gemäß der bevorzugten Ausführungsform der Erfindung.

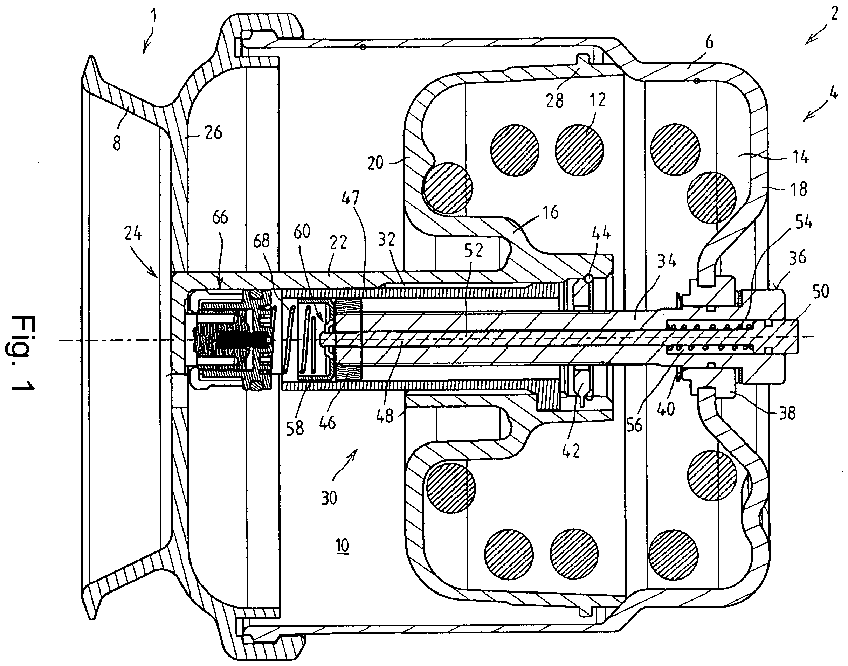

Aufgrund der Symmetrieeigenschaften sind in den Figuren 1 bis 4 einmalig mit Bezugszeichen bezeichnete Elemente, die sich funktions- und wesensgleich mit gegebenenfalls abweichender Orientierung andernorts finden, nicht notwendigerweise nochmals mit Bezugszeichen versehen. Es versteht sich jedoch, dass derartige, einander entsprechende Elemente mit denselben Bezugszeichen versehbar sind.

### Beschreibung einer bevorzugten Ausführungsform der Erfindung

Eine bevorzugte Anwendung der Vorrichtung und des Systems zur Verriegelung schraubbarer Elemente erfolgt beispielsweise bei einem Federspeicher bzw. Federspeichergehäuse eines Federspeicherbremszylinders für eine Bremsanlage eines Fahrzeugs, insbesondere eines Nutzfahrzeugs.

Ein derartiger Federspeicherbremszylinder weist üblicherweise ein Gehäuse auf, in welchem ein Federspeicherbremskolben geführt ist, der den Innenraum des Gehäuses in eine druckbeaufschlagbare Federspeicherbremskammer und eine eine Speicherfeder aufnehmende Federkammer unterteilt. In der Federkammer ist die Speicherfeder so angeordnet, dass sie den Federspeicherbremskolben in Richtung zur Federspeicherbremskammer vorspannt. Damit ein abgestelltes bzw. gebremstes Fahrzeug, in welchem der Federspeicherbremszylinder angeordnet ist, bewegt werden kann, wird die Federspeicherbremskammer derart mit Druckluft beaufschlagt, dass der Federspeicherbremskolben entgegen der Federkraft der Speicherfeder verschoben wird. Dadurch gelangt eine mit dem Federspeicherbremskolben gekoppelte Bremseinrichtung außer Eingriff mit einer Bremsscheibe oder dergleichen, so dass das Fahrzeug nicht weiter gebremst ist. Für Bremsbetätigungen während der Fahrt kann ein derartiger Federspeicherbremszylinder in bekannter Weise mit einem Betriebsbremszylinder gekoppelt sein.

Kommt es nun aufgrund eines Druckabfalls im System zu einer wesentlichen Reduzierung des Luftdrucks in der Federspeicherbremskammer, wird der Federspeicherbremskolben aufgrund der Vorspannung der Speicherfeder derart in Richtung zur Federspeicherbremskammer verschoben, dass die mit dem Federspeicherbremskolben gekoppelte Bremseinrichtung greift und eine Bremsung des Fahrzeugs ausführt. Damit soll beispielsweise bei einem Leitungsabriss der Bremsdruckleitung während der Fahrt zuverlässig verhindert werden, dass ein Nutzfahrzeug ungebremst weiterfährt und somit schwer kontrollierbar wird. Diese Zwangsbremsung bei mangelnder Druckluftzufuhr wird zudem auch bei über längere Zeit abgestellten Anhängern etc. genutzt, damit ein unbeabsichtigtes Wegrollen dieser Fahrzeuge verhindert werden kann.

Die somit durch die mechanische Speicherfeder im Federspeicherbremszylinder in derartigen Fällen ausgeübte Bremswirkung soll jedoch beispielsweise zum Verschieben abgestellter Fahrzeuge oder zum Räumen einer aufgrund einer Panne blockierten Fahrspur wieder gelöst werden können, damit die betreffenden Fahrzeuge bewegt und z. B. Verkehrsbehinderungen aufgehoben werden können.

Da die vorhandene Druckluftversorgung hierbei jedoch häufig durch Leitungsabriss etc. beschädigt ist und nicht eingesetzt werden kann und auch keine ergänzende Druckluftversorgung vorhanden ist, ist es in der Praxis erforderlich, dass derartige Federspeicherbremszylinder eine mechanische Notlöseeinrichtung aufweisen. Diese ist üblicherweise mit einer Betätigungseinrichtung in Gestalt einer Gewindespindel versehen, die von außen zugänglich und drehbar betätigbar ist.

Diese Gewindespindel wirkt dabei in einer bekannten Bauweise mit einem in Axialrichtung feststehend am Gehäuse des Federspeicherbremszylinders angeordneten Abtriebelement, wie z. B. einer Mutter, zusammen, so dass eine Drehung der Gewindespindel eine lineare Verschiebung derselben bewirkt. Hierbei ist bei dieser konkreten Ausführungsform beispielsweise das in axialer Richtung innere Ende der Gewindespindel mit einem Überstand ausgebildet, der mit einer Anlagefläche am Federspeicherkolben in Anlage gebracht werden kann. Aufgrund der durch die Drehbewegung eingeleiteten linearen Versetzung der Gewindespindel in Axialrichtung kommt es somit zu einer ebenfalls linearen Verschiebung des Federspeicherkolbens entgegen der Vorspannkraft der Speicherfeder, so dass hierdurch die mit dem Federspeicherkolben zusammenwirkende Bremseinrichtung gelöst werden kann.

Diese Bauweise hat sich hinsichtlich ihrer Funktionalität in der Praxis bewährt. Allerdings weist sie den Nachteil auf, dass die Gewindespindel nicht derart schwergängig sein darf, dass sie für ein mechanisches Notlösen im Bedarfsfall manuell nicht betätigt werden kann. Bekannte Sicherungsmechanismen wirken aber zum einen einer bedarfsweise verlässlich manuellen Betätigung entgegen. Zum anderen darf sich die Gewindespindel zum mechanischen Notlösen auch nicht selbsttätig lösen oder verstellen können, beispielsweise durch im Betrieb des Fahrzeugs auftretende Erschütterungen oder Vibrationen, so dass eine ungesicherte Anordnung nicht zweckmäßig ist und einfache Sicherungsmaßnahmen, wie etwa eine einfache Sicherungsscheibe, fallweise nicht genügen können.

Fig.1 zeigt einen Ausschnitt eines bekannten kombinierten Betriebsbrems- und Federspeicherbremszylinders 1 (Kombibremszylinder) eines pneumatischen oder elektro-pneumatischen Bremssystems eines Nutzfahrzeugs. Dieses umfasst eine hier nicht gezeigte Betriebsbremsvorrichtung mit einem Betriebsbremszylinder mit einem Gehäuse, in dem ein pneumatisch beaufschlagbarer Betriebsbremskolben geführt ist, welcher über eine Betriebsbremskolbenstange beispielsweise eine Scheibenbremse des Nutzfahrzeugs betätigt.

Der Kombizylinder 1 umfasst weiterhin eine in Fig.1 sichtbare Federspeicherbremseinrichtung 2 mit einem Federspeicherbremszylinder 4 mit einem Gehäuse 6, an welches ein Flansch 8 derart angekoppelt ist, dass das Gehäuse 6 und der Flansch 8 eine im Wesentlichen abgeschlossene Einheit bilden. An den Flansch 8 kann beispielsweise der Betriebsbremszylinder angekoppelt werden. In dem Gehäuse 6 ist ein durch pneumatischen Druck in einer Federspeicherbremskammer 10 gegen die Federkraft einer Speicherfeder 12 in einer Federkammer 14 spannbarer Federspeicherbremskolben 16 geführt, durch welchen der Betriebsbremskolben in Bremszuspannrichtung beaufschlagbar ist. Diese Speicherfeder 12 stützt sich hierbei einerseits auf einem Boden 18 des Gehäuses 6 und andererseits an einem Kolbenteller 20 des Federspeicherbremskolbens 16 ab. Der Betriebsbremszylinder und der Federspeicherbremszylinder 4 bilden hintereinander koaxial angeordnet dann den Kombibremszylinder 1.

Eine Federspeicherbremskolbenstange 22 des Federspeicherbremskolbens 16 durchragt dichtend eine Durchgangsöffnung 24 in einer mit dem Flansch 8 einstückigen Trennwand 26 zwischen dem Federspeicherbremszylinder 4 und dem Betriebsbremszylinder und kann mit ihrer Stirnfläche am nicht gezeigten Betriebsbremskolben anschlagen. Überdies weist der Federspeicherbremskolben 16 noch einen Führungsabschnitt 28 auf, der umfangsseitig in einem Zylinderabschnitt des Gehäuses 6 abgedichtet geführt ist.

In bekannter Weise kann der Federspeicherbremskolben 16 gegen die Wirkung der Speicherfeder 12 durch Belüften der Federspeicherbremskammer 10 in Lösestellung gebracht werden. Weiterhin kann durch Belüften einer Betriebsbremskammer, welche sich zwischen der Trennwand 26 und dem Betriebsbremskolben erstreckt, Letzterer gegen die Wirkung einer sich einerseits am Betriebsbremskolben und andererseits an einer Stirnwand des Betriebsbremszylinders abstützenden Rückholfeder in Zuspannstellung gebracht werden.

Nicht zuletzt ist innerhalb der Federspeicherbremskolbenstange 22 wenigstens teilweise eine mechanische Notlöseeinrichtung 30 integriert, mit welcher die Federspeicherbremse bei Druckausfall not- oder hilfsgelöst werden kann. Mit Hilfe der Notlöseeinrichtung 30 ist ein mechanisches Notlösen der Federspeicherbremse durch manuelle äußere Einwirkung möglich. Die Notlöseeinrichtung 30 ist hierbei in dieser Ausführungsform zentrisch im Federspeicherbremszylinder 4 angeordnet und greift durch eine zentrale Öffnung des Gehäuses 6 in einen Hohlraum 32 der Federspeicherbremskolbenstange 22 ein. Sie weist hierbei eine Gewindespindel 34 auf, an deren äußerem Ende bei der bekannten Anordnung ein Sechskantkopf 36 als Werkzeugansatz zum Ansetzen des Werkzeugs in Form des Sechskantkopfs 36 einstückig ausgebildet und an die Gewindespindel 34 angeformt ist. Die Gewindespindel 34 durchgreift eine Buchse bzw. ein Lagerteil 38 des Gehäuses 6 derart, dass sie darin abgedichtet geführt ist, um eine Drehbewegung ausführen zu können. Gleichzeitig ist die Gewindespindel 34 durch eine Sicherungsscheibe 40 an einer axialen Bewegung gegenüber dem Gehäuse 6 gehindert. In dem Hohlraum 32 der Federspeicherbremskolbenstange 22 ist weiterhin ein Anlageabschnitt 42 des Kolbentellers 20 angeordnet, beispielsweise in Form einer durch einen Sicherungsring 44 gehaltenen Scheibe, gegen welche eine mit der Gewindespindel 34 verschraubbare Mutter 46 anlaufen und dadurch den Federspeicherbremskolben 16 in Richtung auf den Boden 18 des Gehäuses 6 zu, d.h. in Bremslöserichtung mitnehmen kann.

Die Gewindespindel 34 und der Sechskantkopf 36 wirken hierbei als eine Betätigungseinrichtung, die mit einer Übertragungseinrichtung in Gestalt der Mutter 46 zusammenwirkt. Diese ist mit dem Gewindegang der Gewindespindel 34 derart in Eingriff, dass eine Drehbewegung der Gewindespindel 34 in eine lineare Bewegung der Mutter 46 in Axialrichtung übertragen wird. Hierzu ist die hier als Sechskantmutter ausgeführte Mutter 46 formschlüssig in einem Führungsteil 47 im Hohlraum 32 der Federspeicherbremskolbenstange 22 so aufgenommen, dass sie sich nicht verdrehen kann.

Die Notlöseeinrichtung 30 weist ferner eine Indikatoreinrichtung auf. Diese enthält einen Indikatorstab 48, der einen Anzeigeabschnitt 50 und einen hiervon abgestuften Steuerabschnitt 52 mit kleinerem Durchmesser aufweist. Der Indikatorstab 48 besteht vorzugsweise aus wenigstens einem Kunststoff und durchgreift die Gewindespindel 34 mittig und ist darin derart abgedichtet geführt, dass eine Bewegung in Axialrichtung möglich ist. Hierbei ist der Indikatorstab 48 mittels einer Feder 54 gegenüber einem Stufenabschnitt 56 in der Gewindespindel 34 so vorgespannt, dass der Anzeigeabschnitt 50 nach außen gedrückt wird.

An dem vom Anzeigeabschnitt 50 fernen Ende des Steuerabschnitts 52 ist ein quer zur Axialrichtung angeordneter und als Anschlag dienender Anschlagkörper 58 vorhanden, der über die Gewindespindel 34 radial derart hinausragt, dass der äußere Rand des Anschlagkörpers 58 mit der Mutter 46 in Anlage gelangen kann. Der Anschlagkörper 58 ist mit dem Indikatorstab 48 durch eine mittels einer axialen Relativbewegung zwischen dem Indikatorstab 48 und dem Anschlagkörper 58 gefertigten lösbaren Rast- oder Clipsverbindung 60 formschlüssig verbunden.

Bei der Montage der Notlöseeinrichtung 30 wird zunächst bei zugespanntem Zustand der Federspeicherbremse, d.h. bei vom Boden 18 des Gehäuses 6 entferntem Federspeicherbremskolben 16 die Mutter 46 koaxial an den tassenförmigen Anschlagkörper 58 gesetzt. Sodann wird die Federspeicherbremskammer 10 des Federspeicherbremszylinders 4 belüftet, wodurch sich der Federspeicherbremskolben 16 in seine Löseendlage und die Federspeicherbremskolbenstange 22 zusammen mit dem tassenförmigen Anschlagkörper 58 und der Mutter 46 in Richtung auf das Ende der Gewindespindel 34 zu bewegt, bis die Mutter 46 am ersten Gewindegang der Gewindespindel 34 angreift. Sodann wird die Gewindespindel 34 von außerhalb des Gehäuses 6 verdreht, bis die Mutter 46 am Anlageabschnitt 42 des Kolbentellers 20 anliegt. Der Anschlagkörper 58 ist währenddessen durch die Federmittel 68 gegen das Ende der Gewindespindel 34 vorgespannt. Dann wird der Indikatorstab 48 linear nach innen geschoben, bis sein mit einem Ringbund versehenes Ende den Rand einer Aufnahmeöffnung des Anschlagkörpers 58 unter radial elastischer Aufweitung derselben passiert und dann diesen Rand hintergreifend die lösbare Rast- oder Clipsverbindung 60 zwischen dem Indikatorstab 48 und dem Anschlagkörper 58 herstellt. Hierbei ist der Anschlagkörper 58 gegen die vom Indikatorstab 48 ausgeübte Druckkraft durch die Federmittel 68 an der Federspeicherbremskolbenstange 22 abgestützt. Die Rückfederung des Anschlagkörpers 58 mittels der Federmittel 68 nach dem Durchdringen der im Durchmesser etwas kleineren Ausnahmeöffnung im Vergleich zum Durchmesser des Ringbunds unterstützt das Zustandekommen der Rastverbindung 60.

Zum Notlösen des Federspeicherbremszylinders durch die Notlöseeinrichtung 30, d.h. zum Aufheben der Bremswirkung der Federspeicherbremse wird der Sechskantkopf 36 der Gewindespindel 34 so verdreht, dass eine Seitenfläche der Mutter 46 an dem Anlageabschnitt 42 des Kolbentellers 20 anliegt und diesen im Zuge der Drehbewegung entgegen der Vorspannung der Speicherfeder 12 in Richtung zum Boden 18 des Gehäuses 6 zieht. Gemäß der Darstellung in Fig.1 ist der Anzeigeabschnitt 50 des Indikatorstabs 48 hierbei durch die Feder 54 so beaufschlagt, dass ein äußeres Ende hiervon nach außen über den Sechskantkopf 36 übersteht und dadurch anzeigt, dass der Federspeicherbremszylinder 4 notgelöst ist.

Soll nun die Federspeicherbremse wieder manuell zugespannt werden, so wird die Gewindespindel 34 mittels des Sechskantkopfs 36 derart gedreht, dass sich die Mutter 46 in Axialrichtung vom Boden 18 des Gehäuses 6 weg bewegt. Durch ein fortgesetztes Eindrehen der Mutter 46 in die Federspeicherbremskolbenstange 22 gelangt diese schließlich in Eingriff mit dem Anschlagkörper 58 der Indikatoreinrichtung und erzwingt dadurch eine lineare Verschiebung des Indikatorstabs 48 entgegen der Federkraft der Feder 54. Der Anzeigeabschnitt 50 wird dadurch derart relativ zum Sechskantkopf 36 bzw. dem äußeren Ende der Gewindespindel 34 bewegt, dass er eingezogen wird, bis er im wesentlichen bündig hierzu angeordnet ist. Hieran kann ein Benutzer dann erkennen, dass der Federspeicherbremszylinder 1 nicht manuell notgelöst ist.

Aufgrund der Vorspannung durch die Speicherfeder 12 folgt der Kolbenteller 20 dieser Bewegung, wobei die Seitenfläche der Mutter 46 in Anlage zum Anlageabschnitt 42 am Kolbenteller 20 bleibt. Mit dem Kolbenteller 20 bewegt sich auch die Federspeicherbremskolbenstange 22 vom Boden 18 des Gehäuses 6 weg, so dass eine Bremskraft auf die hier nicht dargestellte Betriebsbremseinrichtung jenseits des Flansches 8 ausgeübt wird. Sobald die maximale Bremskraft anliegt, folgt der Kolbenteller 20 der Mutter 46 jedoch nicht weiter.

Der Federspeicherbremszylinder 1 ist dann in der normalen Betriebsstellung, in der die Bremsbetätigung entweder durch Druckluftbeaufschlagung, oder falls keine Druckluft vorhanden ist, eine Bremswirkung durch die Speicherfeder 12 ausgelöst wird. Für einen normalen pneumatischen Betrieb des Federspeicherbremszylinders 2 wird durch einen hier nicht dargestellten Lufteinlass Druckluft in die Federspeicherbremskammer 10 derart gesteuert eingeführt, dass diese Druckluft die Federkraft der Speicherfeder 12 überwindet und so wahlweise, in Abhängigkeit von der Höhe des Drucks, die Bremse löst oder betätigt.

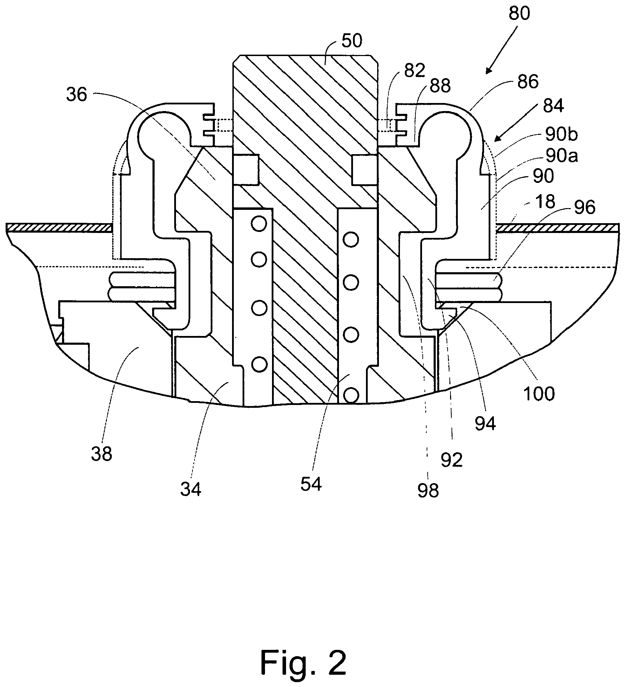

Fig. 2 ist ein vergrößerter Ausschnitt der Notlöseeinrichtung von Fig.1, der anstelle der in Fig. 1 gezeigten Anordnung eine Vorrichtung und eine Anordnung zur Verriegelung schraubbarer Elemente gemäß einer bevorzugten Ausführungsform der Erfindung zeigt.

Anders als bei der in Fig. 1 gezeigten, bekannten Anordnung ist gemäß einer bevorzugten Ausführungsform der Vorrichtung und Anordnung zur Verriegelung eines schraubbaren Elements der am äußeren Ende der Gewindespindel 34 angeformte Sechskantkopf 36 an seiner in axialer Richtung nach oben bzw. vom Federspeicherbremszylinder weg weisenden Oberfläche und zumindest an zwei Seitenteilflächen des Sechskantkopfs 36 spalt- oder nutförmig ausgenommen, d. h. entlang seiner Oberfläche und an wenigstens zwei Seitenteilflächen mit Spalten und/oder Nuten versehen. Die Spalten und Nuten fluchten so zueinander, dass eine Verriegelungsvorrichtung 80 mit einem teilringförmigen Mittelteil (abschnittsweise offener Ringteil) 82 und zwei sich von dem Mittelteil aus nach außen erstreckenden Verriegelungsabschnitten (Verriegelungsflügeln bzw. Flügeln) 84 mithilfe des Ringteils 82 den Anzeigeabschnitt 50 umgreifend zentriert und verdrehsicher in den Sechskantkopf 36 einlegbar ist.

In diese Ausnehmung(en) bzw. Spalten und Nuten und die zentrierte Öffnung des Sechskantkopfs 36 ist somit die Verriegelungsvorrichtung 80 derart verdrehsicher in den Sechskantkopf 36 einlegbar, dass es sich bei angesetztem Werkzeug mit dem Sechskantkopf 36 mitdrehen kann.

Die Verriegelungsvorrichtung 80 besteht somit zum einen aus dem einseitig offenen Rund- oder Ringteil 82, der in Fig. 2 durch Strichlinien angedeutet ist, mit einem Durchmesser derart, dass er einerseits in den Sechskantkopf 36 eingesetzt den Anzeigeabschnitt 50 spielhaltig umgreift, ohne dessen Beweglichkeit und Indikatorfunktion zu beeinträchtigen, und sich aufgrund kleineren Durchmessers der Öffnung des Sechskantkopfs 36 gegen die Innenwandung des Sechskantkopfs 36 verspannt, und andererseits soweit in die Ausnehmung(en) des Sechskantkopfs 36 eintauchen kann, dass er aus der oberen Oberfläche des Sechskantkopfs 36 nicht mehr herausragt, sowie zum anderen aus wenigstens zwei - vorzugsweise symmetrisch - diametral gegenüber liegenden, sich ausgehend von dem Ringteil 82 nach außen erstreckenden bügel- oder flügelartigen Abschnitten, Armen oder Auslegern (Verriegelungsabschnitten) 84.

Jeder Verriegelungsabschnitt 84 wird durch einen, vorzugsweise federnd, biegeelastisch und eine Rückstellkraft erzeugend verformbaren, ausgehend von dem Ringteil 82 nach außen und entlang seines Verlaufs vorzugsweise 90° nach unten gebogen verlaufenden Steg 86 mit einem vorbestimmten Biegeradius spielhaltig in der Ausnehmung bzw. den Ausnehmungen des Sechskantkopfs 36 geführt.

Eine in Höhenrichtung bzw. in der axialen Richtung am ringteilseitigen Ende jedes Verriegelungsabschnitts 84 vorgesehene Ausformung 88 ist so ausgestaltet, dass sie ein Auflager für den entsprechenden Verriegelungsabschnitt 84 in der zugehörigen Ausnehmung des Sechskantkopfs 36 bildet und dadurch die Eintauchtiefe der Verriegelungsvorrichtung 80 in den Sechskantkopf 36 definiert und/oder begrenzt. Vorzugsweise ist die Ausformung 88 auf den Ringteil 82 bezogen symmetrisch ausgebildet und stellt dadurch eine gegebenenfalls beidseitige Eintauchtiefenbegrenzung bereit.

In Fortsetzung des Stegs 86 weist jede Verriegelungsvorrichtung 80 ferner von dem Ringteil 82 abliegend einen Druckaufnahmeabschnitt 90 auf. Der Druckaufnahmeabschnitt 90 ist flächig mit vorzugsweise einer schräg zu einer Gleitfläche 90a elastisch an diese angekoppelten, abgekanteten Auflauf- oder Aufgleitteilfläche 90b ausgeformt. Die Aufgleitteilfläche 90b dient dazu, ein aufsetzendes Werkzeug mit kleinerem Öffnungs- oder Innendurchmesser als die seitliche bzw. räumliche Ausdehnung der Verriegelungsvorrichtung 80 sanft auf bzw. über die Gleitfläche 90a zu führen, und dabei gleichzeitig eine auf die Fläche(n) 90a und 90b einwirkende Spann- oder Druckkraft des Werkzeugs aufzunehmen und zur dadurch bedingt elastischen Verformung des Verriegelungsabschnitts 84 in den Biegeradius des Stegs 86 zu leiten. In anderen Worten bewirkt ein zunächst auf die Aufgleitteilfläche 90b und danach auf die Gleitfläche 90a gleitendes Werkzeug, dessen Öffnung zwar für den Sechskantkopf 36, nicht aber für die Verriegelungsabschnitte 84 in deren entspanntem Zustand (entsprechend deren unbelasteter Ruhelage) ausreichend weit ist, die Ausübung einer Druckkraft auf die Fläche(n) 90a und 90b, woraufhin diese aus der Ruhelage heraus in einer Bewegung einwärts zum Sechskantkopf 36 hin nachgeben und über den Biegeradius des Stegs 86 die Verriegelungsabschnitte 84 nach Art einer Auslenk-, Schwenk- oder Kippbewegung um einen Drehpunkt des Biegeradius im Bereich des Stegs 86 einwärts bewegen.

In Fortsetzung des Druckaufnahmeabschnitts 90 weist jeder Verriegelungsabschnitt 84 außerdem, ebenfalls von dem Ringteil 82 abliegend, einen im Wesentlichen mit Schenkeln, von welchen einer verkürzt ist und unterseitig eine Schrägung aufweist, im Wesentlichen U-förmig verlaufenden Endabschnitt 92 auf. Die Ausformung und Ausdehnung des Endabschnitts 92 in Längsrichtung des Verriegelungsabschnitts 84 sind so bemessen, dass ein hakenförmiges Ende 94 des Endabschnitts 92 (insgesamt ein hakenförmiger Endabschnitt 92, 94) ein zwischen dem Lagerteil 38 und dem Sechskantkopf 36 liegendes ringförmiges Scheibenelement 96 in der entspannten Ruhelage des Verriegelungsflügels 84 untergreift und/oder hintergreift, wobei es in Anlage gegen das ringförmige Scheibenelement 96 geraten kann.

Für den durch ein aufgesetztes Werkzeug druckkraft-beaufschlagten oder druckbeaufschlagten Zustand des Verriegelungsabschnitts 84, in dem sich das hakenförmige Ende 94 von dem ringförmigen Scheibenelement 96 entfernt und sich zu dem Sechskantkopf 36 hin einwärts bewegt, ist eine einstichförmig bzw. wannenförmig umlaufende Ausnehmung 98 mit zur Aufnahme des U-förmigen Endabschnitts 92 ausreichend großer Dimensionierung unterseitig und innenseitig des Sechskantkopfs 36 bereitgestellt, in welche der U-förmige Endabschnitt 92 während seiner Entriegelungsbewegung verfahren kann. Gleichzeitig wird durch dieses Eintauchen des U-förmigen Endabschnitts 92 in die Ausnehmung 98 eine Herausfallsicherung für das Verriegelungselement 80 bereitgestellt, da die den U-förmigen Endabschnitt 92 dann umgreifende wannenförmige Ausnehmung 98 unabhängig von einem Bewegungshub des U-förmigen Endabschnitts 92 ein Herausfallen oder Herauslösen des Verriegelungselements 80 verhindert.

Idealerweise weisen ein außenseitiger Rand der wannenförmig umlaufenden Ausnehmung 98 und ein innerer Umfangsrand des scheibenförmigen Elements 96 keine (wie in Fig. 2 gezeigt), nur eine geringfügige Überdeckung bzw. Überschneidung oder nur einen geringfügigen Abstand voneinander auf. In diesem Fall kann ein Einsetzen der Verriegelungsvorrichtung 80 werkzeuglos manuell, im Fall der Gewindespindel 34 z. B. nach einer erfolgten Grundeinstellung derselben, erfolgen, da durch eine von oben auf die Verriegelungsvorrichtung 80 wirkende Druckkraft etwa von Fingern einer Hand das hakenförmige Ende 94 an einem abgeschrägt in einem geeigneten Winkel zur axialen oder horizontalen Richtung verlaufenden unterseitigen Teil an dem innenseitig oberen Rand des ringförmigen Scheibenelements 96 abläuft, dadurch eine elastische Verformung der Verriegelungsvorrichtung 80 mit Einwärtsbewegung des U-förmigen Endabschnitts 92 in die wannenförmige Ausnehmung 98 erzeugt, sich sodann am Innenumfang des ringförmigen Scheibenelements weiter abwärts bewegt, und schließlich nach Erreichen des innenseitig unteren Rands des ringförmigen Scheibenelements 96 selbsttätig in die entspannte Ruhelage bzw. Einraststellung in einer Ausnehmung 100 des Lagerteils 38 zurückkehrt. Es wird angemerkt, dass die Ausnehmung 100 und das Lagerteil 38 in Zusammenwirkung eine Einrasteinrichtung bilden. In anderen Worten kann durch Ausüben einer nach unten gerichteten Kraft auf die Verriegelungsvorrichtung 80 diese mühelos aufgesteckt und eingerastet ("aufgeklipst") werden.

Die Verriegelungswirkung der Verriegelungsvorrichtung 80 kann in Zusammenwirkung mit dem Lagerteil 38 erzielt werden. Dazu ist das Lagerteil 38 vorzugsweise radial mit zumindest zwei (zur Aufnahme jeweils eines Verriegelungsabschnitts 84), stärker bevorzugt aber einer Vielzahl von zu dem hakenförmigen Ende 94 korrespondierend und die Verriegelungswirkung in vorbestimmt fein abgestuftem Abstand auflösenden Ausnehmungen 100 versehen. Die Ausnehmungen 100 werden von dem ringförmigen Scheibenelement 96 nach oben hin abgedeckt, so dass sich im Verwendungszustand kleine Hohlräume unter dem ringförmigen Scheibenelement 96 und in dem Lagerteil 38 ausbilden, in welche das hakenförmige Ende 94 im Verriegelungszustand eingreifen kann.

Bevorzugt sind hierbei der Abstand zweier Ausnehmungen 100 bzw. die Abstände jeweils zweier Ausnehmungen 100 um den Lagerteil 38 umlaufend derart fein abgestuft, dass eine Selbsteinrastwirkung für ein jeweiliges hakenförmiges Ende 94 bereitgestellt wird. Wird während des Verdrehens des Sechskantkopfs 36 mit aufgesetztem Werkzeug, d. h. in einem noch nicht verriegelten Zustand, eine gewünschte Endstellung zumindest näherungsweise erreicht und in dieser Endstellung das Werkzeug von dem Sechskantkopf 36 abgezogen, kann es vorkommen, dass zumindest ein hakenförmiges Ende 94 nicht exakt einer Ausnehmung 100 gegenüberliegt, sondern vor bzw. auf dem zwischen jeweils zwei Ausnehmungen 100 ausgebildeten Steg (aus Material beispielsweise des Lagerteils 38) zu liegen kommt und somit nicht unmittelbar in die Ausnehmung 100 eingreifen und in diese einrasten kann. Die Ausnehmungen 100 entlang des Umfangs des Lagerteils 38 sind nun derart fein abgestuft beabstandet, dass bereits eine geringfügige weitere Verdrehung des Sechskantkopfs 36 und der Verriegelungsvorrichtung 80, beispielsweise ausgelöst durch Vibrationen oder Krafteinwirkungen anderweitig geeigneter Art im nachfolgenden Betrieb des Fahrzeugs, genügt, um das zumindest eine hakenförmige Ende 94 von dem Steg in eine jeweils nächstliegende Ausnehmung 100 gleiten und dort einrasten zu lassen. Es ist daher nicht in jedem Falle notwendig, die Einrastwirkung der Verriegelungsvorrichtung 80 nach Abschluss der Einstellung, beispielsweise einer Grundeinstellung oder einer Einstellung auf einen vorbestimmten Wert eines Anzugsdrehmoments oder einer (nicht gezeigten) Skala an dem Lagerteil 38, des Sechskantkopfs zu überprüfen, da die Selbsteinrastung bzw. selbsttätige Verriegelung automatisch dazu führt, dass erforderlichenfalls bei nächster Gelegenheit und in einem definierten Toleranzbereich (der durch die Stegbreite bzw. den Abstand zwischen zwei Ausnehmungen 100 definierbar ist) eine Verriegelungswirkung herbeigeführt wird bzw. eintritt.

In der Praxis hat dies unter anderem den Vorteil, dass es beispielsweise genügen kann, eine Markierung an dem Sechskantkopf hinreichend genau auf eine Markierung an etwa dem Lagerteil 38 oder dergleichen zu stellen und sodann das Werkzeug abzuziehen. Die Verriegelungswirkung tritt entweder unmittelbar ein, oder erforderlichenfalls bei nächster Gelegenheit. Die dazu erforderliche zusätzliche Verdrehung kann durch geeignete Auswahl der Anzahl von Ausnehmungen 100 und deren Beabstandung definiert und in einem gewünschten Zulässigkeitsbereich gehalten werden.

Die Verteilung der Ausnehmungen 100 entlang des Umfangs des Lagerteils 38 kann hierbei in gleichen Abständen vorgesehen sein, oder in veränderlichen Abständen derart, dass entlang des Umfangs Abschnitte mit kleineren und/oder größeren Abständen zwischen Ausnehmungen erzeugt sind. Durch veränderliche Abstände kann beispielsweise um eine Grund- oder Sollstellung eine exaktere Einhaltung der Grund- oder Sollstellung auch bei der Selbsteinrastung erzielt werden, ohne den Herstellungs- und Bearbeitungsaufwand für den gesamten Lagerteilumfang entsprechend einer solchen Exaktheitsanforderung zu erhöhen.

Die Anzahl von Ausnehmungen 100 kann in einer praktischen Ausgestaltung beispielsweise 8 oder 16 betragen. Eine Beschränkung hierauf besteht jedoch nicht.

Es wird angemerkt, dass die Ausnehmungen 100 nicht notwendigerweise direkt in das Lagerteil 38 eingeformt sein müssen, sondern beispielsweise auch durch einen separaten, in das Lagerteil 38 einsetzbaren oder auf das Lagerteil 38 aufsetzbaren, beispielsweise flachen Verriegelungsring bereitgestellt werden können. Im letztgenannten Fall ist dazu denkbar, das Lagerteil 38 oberseitig und den Verriegelungsring unterseitig, oder das Lagerteil 38 an einem innenseitigen Umfang einer Verriegelungsringaufnahme und den Verriegelungsring an einem außenseitigen Umfang, mit geeigneten und/oder korrespondierenden Ausformungen (einer Verdrehsicherung) zu versehen, die ein Verdrehen des Verriegelungsrings gegenüber dem Lagerteil 38 unterbinden. Beispielsweise können die Ausnehmungen 100 alternativ in dem ringförmigen Scheibenelement 96 vorgesehen sein, sofern eine Verdrehung des ringförmigen Scheibenelements 96 gegenüber dem Lagerteil 38 unterbunden wird.

Während eine Vorrichtung zur Verriegelung schraubbarer Elemente bereits grundsätzlich durch die Verriegelungsvorrichtung 80 ausgebildet wird, sofern ein schraubbares Element und ein Lagerbereich, Führungsbereich und/oder Auflaufbereich für dasselbe geeignet ausgestaltet sind (beispielsweise können schraubbare Elemente und solche Bereiche grundsätzlich zur Verwendung mit der Verriegelungsvorrichtung 80 vorgesehen sein, ohne dass die Verwendung der Verriegelungsvorrichtung in jedem Falle unmittelbar erfolgen muss), wird ein System bzw. eine Anordnung zur Verriegelung schraubbarer Elemente durch Zusammenwirken eines zur Aufnahme der Verriegelungsvorrichtung ausgeformten schraubbaren Elements, die Verriegelungsvorrichtung selbst und ein mit Ausnehmungen für den Eingriff der Verriegelungsvorrichtung darin versehenes, vorzugsweise selbst drehgesichertes Lager- oder Auflaufteil geschaffen. Im letztgenannten Fall entsteht insbesondere zusätzlich die Möglichkeit der Nachrüstung bereits bestehender Schraubverbindungen.

Der Werkstoff der Verriegelungsvorrichtung 80 ist nicht auf ein bestimmtes Material beschränkt, da bei einer Verdrehsicherung des schraubbaren Elements in der Regel nur geringe Kräfte (etwa nur Seitenkräfte um die axiale Richtung) auf die Verriegelungsvorrichtung 80 einwirken. Insoweit sind zur Herstellung der Verriegelungsvorrichtung 80 ausreichend bruchsichere und/oder ausreichend elastische und dennoch ausreichend steife bzw. biegesteife Kunststoffe geeignet. Alternativ kann die Verriegelungsvorrichtung 80 auch mit beispielsweise einem biegegeformten Stanzteil aus Metall, etwa einem bei Verformung ausreichende Elastizität und Rückstellkraft, mithin eine entsprechende Federwirkung bei ebenfalls ausreichender Biegesteifigkeit, bereitstellenden Blechmaterial, dargestellt werden. Insoweit die Teil einer Einrasteinrichtung in dem Lagerteil 38 bildenden Ausnehmungen 100 nicht einstückig mit dem Lagerteil 38 ausgeformt sind, in anderen Worten direkt aus diesem ausgenommen oder in diesen eingeformt sind, besteht für den Werkstoff, in dem die Ausnehmungen 100 erzeugt sind, ebenfalls keine notwendige Beschränkung auf ein bestimmtes Material. Bei Verwendung eines Verriegelungsrings kann dieser daher beispielsweise auch aus z.B. einem Kunststoff gefertigt sein.

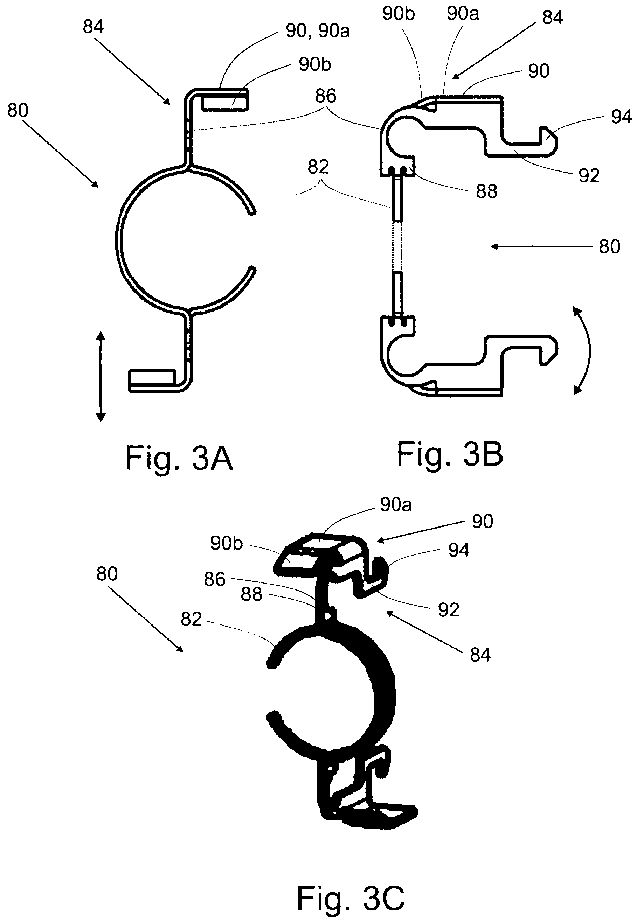

Fig. 3A bis 3C zeigen unter Verwendung derselben Bezugszeichen für in den Fig. 1 und 2 bereits gezeigte Elemente schematische Ansichten der Verriegelungsvorrichtung 80 gemäß der bevorzugten Ausführungsform, wobei Fig. 3A eine Aufsicht auf die Verriegelungsvorrichtung 80 darstellt, Fig. 3B eine zu Fig. 3A korrespondierende Seitenansicht der Verriegelungsvorrichtung 80 darstellt, und Fig. 3C eine perspektivische Ansicht der Verriegelungsvorrichtung 80 abbildet.

In Fig. 3A ist auch dargestellt, dass die Druckaufnahmeabschnitte 90 der beiden Verriegelungsabschnitte 84 so ausgerichtet sind, dass sie bei in den Sechskantkopf 36 eingesetzter Verriegelungsvorrichtung 80 an bzw. auf jeweils diagonal gegenüberliegenden Hälften der mittig von der Ausnehmung (Spalt oder Nut) durchlaufenen Seitenfläche des Sechskantkopfs 36 zu liegen kommen. Diese Anordnung stellt eine gute Krafteinleitung in die Verriegelungsabschnitte 84 und den Sechskantkopf 36 bei Drehen derselben mit dem Werkzeug bereit und wirkt, da die Drehkräfte gleichsinnig angreifen und gleichsinnig in die Verriegelungsvorrichtung 80 geleitet werden, einer unerwünschten Verspannung in sich und/oder einer Eigenverformung derselben während der Drehbewegung entgegen. Dadurch wird erreicht, dass bei Entfernen des Werkzeugs die hakenförmigen Enden 94 diametral gegenüberliegen, und wird vermieden, dass diese versetzt in die Ausnehmungen 100 eingreifen und ein Einrasten erschwert wird. Bei einem versetzten, d. h. nicht diametral gegenüberliegenden, Eingreifen kann eine in sich verspannt verbaut verbleibende Verriegelungsvorrichtung 80 unerwünscht eine geringere Verdrehsicherungswirkung bereitstellen und einer höheren Bruchgefahr ausgesetzt sein.

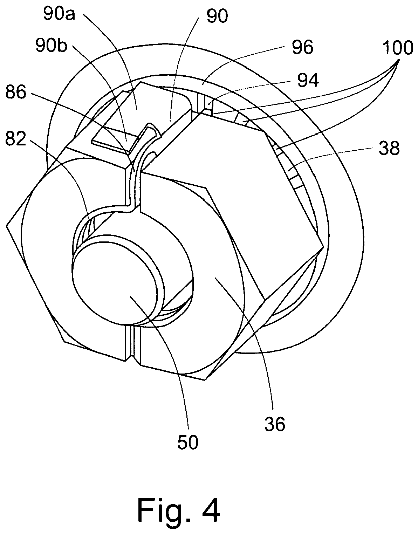

Fig. 4 zeigt unter Verwendung derselben Bezugszeichen für in den Fig. 1 bis 3 bereits gezeigte Elemente eine vereinfachte perspektivische Darstellung einer aus einem schraubbaren Teil (dem Sechskantkopf 36), der Verriegelungsvorrichtung bzw. dem Verriegelungselement 80 und einem Einrastabschnitt 38, 100 mit den Ausnehmungen 100 (hier ausschnittsweise am Lagerteil 38; der Lagerteil 38 ist im Weiteren nicht dargestellt) bestehenden Anordnung gemäß der bevorzugten Ausführungsform der Erfindung.

Insbesondere veranschaulicht Fig. 4 die Zusammenwirkung dieser Elemente dahingehend, dass der Sechskantkopf 36 oberseitig und entlang zwei seiner Seitenflächen nutförmig ausgenommen ist. In dieser Ausnehmung ist die Verriegelungsvorrichtung 80 so eingelegt, dass der Ringteil 82 den Anzeigeabschnitt 50 locker umgreift und sich am Innenumfang, beispielsweise an einem Gewinde, des Sechskantkopfs 36 gegen den Innenumfang aufspannend zentriert gehalten wird, und die Verriegelungsabschnitte 84 in der seitlichen Ausnehmung bzw. Nut des Sechskantkopfs 36 zum Lagerteil 38 hin verlaufen. Parallel zu einer Hälfte der Seitenfläche des Sechskantkopfs 36 erhöht bzw. beabstandet (es ist der werkzeuglose bzw. entspannte Zustand gezeigt) liegt, um einen vorbestimmten Winkel gegenüber dem Längsverlauf des Verriegelungsabschnitts 84 abgebogen bzw. abgekantet, eine der beiden Druckaufnahmeflächen 90 mit Auflaufteilfläche 90a und Gleitfläche 90b. Das hakenfömige Ende 94 des Verriegelungsabschnitts 84 liegt in einer Ausnehmung 100 im Lagerteil 38 und hintergreift das ringförmige Scheibenelement 96.

Die Vorrichtung zur Verriegelung eines schraubbaren Elements und eine diese in Zusammenwirkung mit anderen Teilen verwendende Anordnung wurden anhand eines verdrehsicheren Haltens einer Gewindespindel für ein manuelles Notlösen eines Federspeicherbremszylinders beschrieben. Anwendungs- oder Einsatzbereiche der Verriegelungsvorrichtung bzw. der Anordnung sind jedoch nicht darauf beschränkt, sondern finden sich vielfältig und insbesondere an schraubbaren Verbindungen, die einerseits zwar festzulegen und gegen selbsttätiges und/oder unerwünschtes Verdrehen bzw. Lösen oder Festgehen zu sichern sind, andererseits aber einer jederzeit möglichen Verstellung oder einem jederzeit möglichen Lösen zugänglich bleiben sollen.

Vorstehend wurde somit eine Vorrichtung zur Verriegelung eines schraubbaren Elements, mit einem Ringteil (82) und zumindest zwei Verriegelungsabschnitten (84), die sich von dem Ringteil (82) ausgehend erstrecken, beschrieben. Jeder Verriegelungsabschnitt (80) beinhaltet einen Steg (86), der den Verriegelungsabschnitt (84) mit dem Ringteil (82) verbindet und einen Stegteil mit einer vorbestimmten Krümmung aufweist, um den und/oder an dem der Verriegelungsabschnitt (84) bei Einwirken einer Druckkraft von außen in der zweiten Ebene auslenkbar ist, einen Druckaufnahmeabschnitt (90) zur Aufnahme der Druckkraft, und einen hakenförmigen Endabschnitt (92, 94), der in druckkraft-beaufschlagter Auslenkung des Verriegelungsabschnitts (84) in eine Entriegelungsstellung verfährt, und druckkraft-unbeaufschlagt selbststellend in eine Verriegelungsstellung zurückkehrt. Außerdem wird eine Anordnung zur Verriegelung eines schraubbaren Elements vorgeschlagen, mit der Vorrichtung (80) zur Verriegelung eines schraubbaren Elements, dem schraubbaren Element (34, 36), und einer Einrasteinrichtung (38, 100) außerhalb der Vorrichtung (80) und des schraubbaren Elements (34, 36), die dem hakenförmigen Endabschnitt (92, 94) so zugeordnet ist, dass dieser rastend in eine Ausnehmung (100) in der Einrasteinrichtung (38, 100) eingreift.

### Bezugszeichenliste

- 1: Kombizylinder
- 2: Federspeicherbremseinrichtung
- 4: Federspeicherbremszylinder
- 6: Gehäuse
- 8: Flansch
- 10: Federspeicherbremskammer
- 12: Speicherfeder
- 14: Federkammer
- 16: Federspeicherbremskolben
- 18: Boden
- 20: Kolbenteller
- 22: Federspeicherbremskolbenstange
- 24: Durchgangsöffnung
- 26: Trennwand
- 28: Führungsabschnitt
- 30: Notlöseeinrichtung
- 32: Hohlraum
- 34: Gewindespindel
- 36: Sechskantkopf
- 38: Buchse
- 40: Sicherungsscheibe
- 42: Anlageabschnitt
- 44: Sicherungsring
- 46: Mutter
- 47: Führungsteil
- 48: Indikatorstab
- 50: Anzeigeabschnitt
- 52: Steuerabschnitt
- 54: Feder
- 56: Stufenabschnitt
- 58: Anschlagkörper
- 66: Belüftungseinrichtung
- 68: Federmittel
- 80: Verriegelungselement
- 82: Ringteil
- 84: Verriegelungsflügel
- 86: Steg
- 88: Ausformung
- 90: Druckaufnahmeabschnitt
- 90a: Gleitfläche
- 90b: Aufgleitteilfläche
- 92: Endabschnitt
- 94: hakenförmiges Ende
- 96: scheibenförmiges Element
- 98: Ausnehmung
- 100: Ausnehmung

## Patentansprüche

1. Vorrichtung zur Verriegelung eines schraubbaren Elements, aufweisend:
- einen Ringteil (82) mit einem Umfang in einer ersten Ebene;
- zumindest zwei Verriegelungsabschnitte (84), die sich von dem Ringteil (82) ausgehend mit einer Längsrichtung in einer zur Umfangsebene des Ringteils (82) jeweils lotrechten zweiten Ebene erstrecken, wobei jeder Verriegelungsabschnitt (80) beinhaltet:
- einen Steg (86), der in der zweiten Ebene den Verriegelungsabschnitt (84) mit dem Ringteil (82) verbindet und einen Stegteil mit einer vorbestimmten Krümmung aufweist, um den und/oder an dem der Verriegelungsabschnitt (84) bei Einwirken einer Druckkraft von außen in der zweiten Ebene auslenkbar ist;
- einen Druckaufnahmeabschnitt (90) zur Aufnahme der Druckkraft, der sich in der Längsrichtung an den Steg (86) anschließt und mit einer Fläche (90a, 90b) in einer zu der zweiten Ebene lotrechten dritten Ebene angeordnet ist; und
- einen hakenförmigen Endabschnitt (92, 94), der sich in der zweiten Ebene in der Längsrichtung an den Druckaufnahmeabschnitt (90) anschließt, in druckkraft-beaufschlagter Auslenkung des Verriegelungsabschnitts (84) in eine Entriegelungsstellung verfährt, und druckkraft-unbeaufschlagt selbst-stellend in eine Verriegelungsstellung zurückkehrt.

2. Vorrichtung nach Anspruch 1, **dadurch gekennzeichnet, dass** sich jeweils zumindest zwei Verriegelungsabschnitte (84) diametral gegenüberliegend von dem Ringteil (82) nach außen hin erstrecken.

3. Vorrichtung nach Anspruch 1 oder 2, **dadurch gekennzeichnet, dass** an dem sich an dem Ringteil (82) befindenden Ende des Stegs (86) zumindest ein zu der Umfangsebene des Ringteils (82) beabstandetes Auflager ausgebildet ist.

4. Vorrichtung nach einem der vorangehenden Ansprüche, **dadurch gekennzeichnet, dass** der Ringteil (82) einen elastischen und nicht geschlossenen Ring mit einem offenen Abschnitt bildet, der nicht geschlossene Ring in einer Ruhelage einen vorbestimmten Durchmesser aufweist, und außerhalb der Ruhelage eine auf eine Rückkehr in die Ruhelage hin wirkende Rückstellkraft erzeugt.

5. Vorrichtung nach einem der vorangehenden Ansprüche, **dadurch gekennzeichnet, dass** der Stegteil mit vorbestimmter Krümmung derart zwischen flächigen Abschnitten des Verriegelungsabschnitts (84) ausgeformt ist, dass druckkraft-beaufschlagt ein Auslenken nur des in Längsrichtung auf den Stegteil folgenden Teils des Verriegelungsabschnitts (84) erfolgt und dieser Teil dabei in der zweiten Ebene unverformt bleibt.

6. Vorrichtung nach einem der vorangehenden Ansprüche, **dadurch gekennzeichnet, dass** der Druckaufnahmeabschnitt (90) in Längsrichtung des Verriegelungsabschnitts (84) eine vorbestimmten Länge aufweist, entlang dieser vorbestimmten Länge die Fläche (90a, 90b) in die dritte Ebene verläuft, die Fläche (90a, 90b) in eine in Höhenrichtung oberteilige Aufgleitteilfläche (90b) und eine unterteilige Gleitfläche (90a) unterteilt ist, und die Aufgleitteilfläche (90b) gegen die Gleitfläche (90a) in einem vorbestimmten Winkel zu dem Ringteil (82) hin geneigt ist.

7. Vorrichtung nach einem der vorangehenden Ansprüche, **dadurch gekennzeichnet, dass** der hakenförmige Endabschnitt (92, 94) an einem unteren Ende des Druckaufnahmeabschnitts (90) beginnend U-förmig ausgeformt ist, und das von dem Druckaufnahmeabschnitt (90) entfernte Schenkelende (94) des hakenförmigen Endabschnitts (92, 94) verkürzt ist und an seiner Unterseite einen zu der Längsrichtung in einem vorbestimmten Winkel schräg verlaufenden Abschnitt aufweist.

8. Anordnung zur Verriegelung eines schraubbaren Elements, aufweisend-
- die Vorrichtung (80) nach einem der Ansprüche 1 bis 7;
- das schraubbare Element (34, 36), wobei das schraubbare Element in seiner Oberfläche zumindest eine Ausnehmung aufweist, welche die Vorrichtung (80) und/oder abschnittsweise den Verriegelungsabschnitt (84) verdrehsicher aufnimmt; und
- eine Einrasteinrichtung (38, 100) außerhalb der Vorrichtung (80) und des schraubbaren Elements (34, 36), die positionell dem hakenförmigen Endabschnitt (92, 94) der Vorrichtung (80) so zugeordnet ist, dass der hakenförmige Endabschnitt (92, 94) im Verriegelungszustand der Anordnung rastend in eine Ausnehmung (100) in der Einrasteinrichtung (38, 100) eingreift.

9. Anordnung nach Anspruch 8, **dadurch gekennzeichnet, dass**
- die Einrasteinrichtung (38, 100) ringförmig in einem das schraubbare Element (34, 36) führende und/oder aufnehmenden Lagerteil (38) angeordnet ist und entlang der Ringform eine Vielzahl von Ausnehmungen (100) in vorbestimmten Abständen voneinander aufweist;
- ein ringförmiges Scheibenelement (96) vorgesehen ist, das auf der Einrasteinrichtung (38, 100) aufliegend die Vielzahl von Ausnehmungen (100) oberseitig abdeckt, an einem Innenumfang eine Wegbegrenzung für den hakenförmigen Endabschnitt (92, 94) nach außen bildet, und in Zusammenwirkung mit der Rückstellkraft des Verriegelungsabschnitts (84) in die Ruhelage einer druckkraft-unbeaufschlagten Entriegelung entgegenwirkt;
- das schraubbare Element (34, 36) in Längsrichtung und korrespondierend zu der U-Form des hakenförmigen Endabschnitts (92, 94) eine umlaufend wannenförmige Ausnehmung zur Aufnahme des hakenförmigen Endabschnitts (92, 94) in dessen druckkraft-beaufschlagter Entriegelungsstellung aufweist; und
- die Außenfläche des schraubbaren Elements (34, 36) in Längsrichtung so zu einem innenseitigen Profil des Verriegelungsabschnitts (84) beabstandet ist, dass ausreichend Raum für die Auslenkung des Verriegelungsabschnitts in die druckkraft-beaufschlagte Entriegelungsstellung bereitgestellt ist.

10. Anordnung nach Anspruch 8 oder 9, **dadurch gekennzeichnet, dass** das schraubbare Element (34, 36) oberseitig zentriert eine rundförmige Öffnung zur Aufnahme des Ringteils (82) aufweist, wobei ein Durchmesser der Öffnung derart kleiner als der vorbestimmte Durchmesser des Ringteils (82) in Ruhelage ist, dass sich ein in der Öffnung aufgenommener Ringteil (82) herausfallsicher in der Öffnung verspannt.

11. Anordnung nach einem der Ansprüche 8 bis 10, **dadurch gekennzeichnet, dass** die Tiefe der Ausnehmung in der Oberfläche des schraubbaren Elements (34, 36) und das Auflager an dem sich an dem Ringteil (82) befindenden Ende des Stegs (86) derart in Zuordnung sind, dass der hakenförmige Endabschnitt (92, 94) der Vorrichtung (80) und die Ausformung (100) in dem Einrastabschnitt (38, 100) in Höhenrichtung positionell korrespondieren.

12. Anordnung nach einem der Ansprüche 8 bis 11, **dadurch gekennzeichnet, dass** der Abstand zweier Ausnehmungen (100) derart gewählt ist, dass in einem druckkraft-unbeaufschlagten Zustand ausgehend von einer erreichten Endposition des schraubbaren Elements (34, 36) ein zwischen zwei Ausnehmungen liegendes hakenförmiges Ende (94) bei Einwirken einer äußeren Kraft selbsttätig in die jeweils nächstliegende Ausnehmung (100) rastend eingreift.

13. Anordnung nach einem der Ansprüche 8 bis 12, **dadurch gekennzeichnet, dass** entlang eines Umfangs der Einrasteinrichtung (38) die Vielzahl von Ausnehmungen (100) gleich beabstandet angeordnet sind.

14. Anordnung nach einem der Ansprüche 8 bis 12, **dadurch gekennzeichnet, dass** entlang eines Umfangs der Einrasteinrichtung (38) die Vielzahl von Ausnehmungen ungleich beabstandet angeordnet sind, wobei in einem Abschnitt des Umfangs, in dem sich eine vorbestimmte Position des schraubbaren Elements (32, 34) befindet, der Abstand zwischen zwei benachbarten Ausnehmungen (100) kleiner ist als der Abstand zwischen zwei benachbarten Ausnehmungen (100) in anderen Abschnitten des Umfangs.

## Claims

1. Device for locking a screwable element, having:
- a ring-shaped part (82) with a circumference in a first plane;
- at least two locking sections (84) which extend from the ring-shaped part (82) with a longitudinal direction in a second plane in each case perpendicular to the circumferential plane of the ring-shaped part (82), wherein each locking section (80) comprises:
- a web (86) which, in the second plane, connects the locking section (84) to the ring-shaped part (82) and which has a web part with a predetermined curvature around which and/or on which the locking section (84) can be deflected in the second plane under the action of a pressure force from the outside;
- a pressure-accommodating section (90) for accommodating the pressure force, which pressure-accommodating section adjoins the web (86) in the longitudinal direction and is arranged with a surface (90a, 90b) in a third plane perpendicular to the second plane; and
- a hook-shaped end section (92, 94) which, in the second plane, adjoins the pressure-accommodating section (90) in the longitudinal direction and which, in the event of deflection of the locking section (84) under the action of pressure force, moves into an unlocking position, and which, in the absence of action of pressure force, automatically returns into a locking position.

2. Device according to Claim 1, **characterized in that** in each case at least two locking sections (84) extend diametrically oppositely outward from the ring-shaped part (82).

3. Device according to Claim 1 or 2, **characterized in that**, on that end of the web (86) which is situated at the ring-shaped part (82), there is formed at least one support which is spaced apart from the circumferential plane of the ring-shaped part (82).

4. Device according to one of the preceding claims, **characterized in that** the ring-shaped part (82) forms an elastic and non-closed ring with an open section, and the non-closed ring has a predetermined diameter in a rest position and generates, outside the rest position, a restoring force which acts so as to effect a return into the rest position.

5. Device according to one of the preceding claims, **characterized in that** the web part is formed with a predetermined curvature between areal sections of the locking section (84) such that, under the action of pressure force, a deflection only of that part of the locking section (84) which follows the web part in the longitudinal direction occurs, and here, said part remains non-deformed in the second plane.

6. Device according to one of the preceding claims, **characterized in that** the pressure-accommodating section (90) has a predetermined length in the longitudinal direction of the locking section (84), the surface (90a, 90b) runs in the third plane along said predetermined length, the surface (90a, 90b) is divided into an upper-part slide-on partial surface (90b) in relation to the height direction and a lower-part sliding surface (90a), and the slide-on partial surface (90b) is inclined relative to the sliding surface (90a) at a predetermined angle toward the ring-shaped part (82).

7. Device according to one of the preceding claims, **characterized in that** the hook-shaped end section (92, 94) is of U-shaped form starting at a lower end of the pressure-accommodating section (90), and that limb end (94) of the hook-shaped end section (92, 94) which is remote from the pressure-accommodating section (90) is shortened and has, on its underside, a section which runs obliquely at a predetermined angle relative to the longitudinal direction.

8. Arrangement for locking a screwable element, having
- the device (80) according to one of Claims 1 to 7;
- the screwable element (34, 36), wherein the screwable element has, in its surface, at least one recess which receives the device (80), and/or sections of the locking section (84), in rotationally fixed fashion; and
- a detent engagement means (38, 100) outside the device (80) and outside the screwable element (34, 36), which detent engagement means is assigned in terms of position to the hook-shaped end section (92, 94) of the device (80) such that the hook-shaped end section (92, 94), in the locking state of the arrangement, engages with detent action into a recess (100) of the detent engagement device (38, 100).

9. Arrangement according to Claim 8, **characterized in that**
- the detent engagement device (38, 100) is arranged in ring-shaped fashion in a bearing part (38) which guides and/or receives the screwable element (34, 36), and said detent engagement device has, along the ring shape, a multiplicity of recesses (100) at predetermined intervals relative to one another;
- a ring-shaped disk element (96) is provided which, lying on the detent engagement device (38, 100), covers the multiplicity of recesses (100) at a top side, which ring-shaped disk element, at an inner circumference, forms a travel delimitation for the hook-shaped end section (92, 94) in an outward direction, and which ring-shaped disk element, in interaction with the restoring force of the locking section (84) into the rest position, counteracts an unlocking in the absence of action of pressure force;
- the screwable element (34, 36) has, in the longitudinal direction and correspondingly to the U shape of the hook-shaped end section (92, 94), an encircling trough-shaped recess for receiving the hook-shaped end section (92, 94) when the latter is in its unlocking position under the action of pressure force; and
- the outer surface of the screwable element (34, 36) is, in the longitudinal direction, spaced apart from an inner-side profile of the locking section (84) such that sufficient space is provided for the deflection of the locking section into the unlocking position under the action of pressure force.

10. Arrangement according to Claim 8 or 9, **characterized in that** the screwable element (34, 36) has, centred on the top side, a circular opening for receiving the ring-shaped part (82), wherein a diameter of the opening is smaller than the predetermined diameter of the ring-shaped part (82) in the rest position, in such a way that a ring-shaped part (82) received in the opening is braced in the opening so as to be secured against falling out.

11. Arrangement according to one of Claims 8 to 10, **characterized in that** the depth of the recess in the surface of the screwable element (34, 36) and the support on that end of the web (86) which is situated at the ring-shaped part (82) are assigned to one another such that the hook-shaped end section (92, 94) of the device (80) and the recess (100) in the detent engagement section (38, 100) correspond in terms of position in the height direction.

12. Arrangement according to one of Claims 8 to 11, **characterized in that** the spacing between two recesses (100) is selected such that, in a state without action of pressure force, proceeding from an attained end position of the screwable element (34, 36), a hook-shaped end (94) situated between two recesses automatically engages with detent action, under the action of external force, into the respectively closest recess (100).

13. Arrangement according to one of Claims 8 to 12, **characterized in that** the multiplicity of recesses (100) are arranged so as to be spaced apart uniformly along a circumference of the detent engagement device (38).

14. Arrangement according to one of Claims 8 to 12, **characterized in that**, along a circumference of the detent engagement device (38), the multiplicity of recesses is arranged so as to be spaced apart non-uniformly, wherein the spacing between two adjacent recesses (100) in a section of the circumference in which a predetermined position of the screwable element (32, 34) is situated is smaller than the spacing between two adjacent recesses (100) in other sections of the circumference.

## Revendications

1. Dispositif de verrouillage d'un élément vissable comportant :
- une partie (82) annulaire ayant un pourtour dans un premier plan ;
- au moins deux segments (84) de verrouillage, qui s'étendent, en partant de la partie (82) annulaire, en ayant un direction longitudinale, dans un deuxième plan perpendiculaire au plan de pourtour de la partie (82) annulaire, chaque segment (80) de verrouillage comportant :
- une âme (86), qui relie, dans le deuxième plan, le segment (84) de verrouillage à la partie (82) annulaire et qui a une partie d'âme ayant une courbure définie à l'avance, autour de laquelle et/ou sur laquelle le segment (84) de verrouillage peut être dévié dans le deuxième plan sous l'effet d'une force de pression de l'extérieur ;
- un segment (90) d'absorption de la pression, pour absorber la force de pression, qui se raccorde dans la direction longitudinale à l'âme (86) et qui est disposé, par une surface (90a, 90b), dans un troisième plan perpendiculaire au deuxième plan et
- un segment (92, 94) d'extrémité en forme de crochet, qui se raccorde dans le deuxième plan, dans la direction longitudinale, au segment (90) d'absorption de la pression, qui, suivant une déviation sous l'effet de la force de pression du segment (84) de verrouillage, se déplace pour venir dans une position de déverrouillage et revient, lorsqu'il n'est pas soumis à la force de pression, automatiquement dans une position de verrouillage.

2. Dispositif suivant la revendication 1, **caractérisé en ce qu'**au moins deux segments (84) de verrouillage s'étendent, de manière diamétralement opposée, de la partie (82) annulaire vers l'extérieur.

3. Dispositif suivant la revendication 1 ou 2, **caractérisé en ce qu'**à l'extrémité, se trouvant sur la partie (82) annulaire, de l'âme (86) est formé au moins un support à distance du plan de pourtour de la partie (82) annulaire.

4. Dispositif suivant l'une des revendications précédentes, **caractérisé en ce que** la partie (82) annulaire forme un anneau élastique et non fermé, ayant un segment ouvert, l'anneau non formé a, dans une position de repos, un diamètre défini à l'avance et, en dehors de la position de repos, produit une force de rappel ramenant dans la position de repos.

5. Dispositif suivant l'une des revendications précédentes, **caractérisé en ce que** la partie d'âme de courbure définie à l'avance est déformée entre des segments plats du segment (84) de verrouillage, de manière à ce que, soumis à une force de pression, il se produise une déviation seulement de la partie, faisant suite à la partie d'âme dans la direction longitudinale, du segment (84) de verrouillage et cette partie reste non déformée dans le deuxième plan.

6. Dispositif suivant l'une des revendications précédentes, **caractérisé en ce que** le segment (90) d'absorption de la pression a, dans la direction longitudinale du segment (84) de verrouillage, une longueur définie à l'avance, le long de cette longueur définie à l'avance, la surface (90a, 90b) s'étend dans le troisième plan, la surface (90a, 90b) est subdivisée en une sous-surface (90b) de glissement du côté supérieur dans la direction en hauteur et en une surface (90a) de glissement du côté inférieur et la sous-surface (90b) de glissement est inclinée par rapport à la surface (90a) de glissement, d'un angle défini à l'avance en direction de la partie (82) annulaire.

7. Dispositif suivant l'une des revendications précédentes, **caractérisé en ce que** le segment (92, 94) d'extrémité en forme de crochet est déformé en forme de U à partir d'une extrémité inférieure du segment (90) d'absorption de la pression et l'extrémité (94) de branche, éloignée du segment (90) d'absorption de la pression, du segment (92, 94) d'extrémité en forme de crochet est raccourcie et a, sur son côté inférieur, un segment incliné d'un angle défini à l'avance par rapport à la direction longitudinale.

8. Agencement de verrouillage d'un élément vissable comportant
- le dispositif (80) suivant l'une des revendications 1 à 7 ;
- l'élément (34, 36) vissable, l'élément vissable ayant, dans sa surface, au moins un évidement, qui reçoit, sans possibilité de torsion, le dispositif (80) et/ou, par segment, le segment (84) de verrouillage et
- un dispositif (38, 100) d'encliquetage à l'extérieur du dispositif (80) et de l'élément (34, 36) vissable, qui est associé en position au segment (92, 94) d'extrémité en forme de crochet du dispositif (80), de manière à ce que le segment (92, 94) d'extrémité en forme de crochet s'accroche, à l'état de verrouillage de l'agencement, en s'encliquetant dans un évidement (100) du dispositif (38, 100) d'encliquetage.

9. Agencement suivant la revendication 8, **caractérisé en ce que**
- le dispositif (38, 100) d'encliquetage est disposé annulairement dans une partie (38) de palier, conduisant et/ou recevant l'élément (34, 36) vissable et a, le long de la forme annulaire, une pluralité d'évidements (100) à des distances définies à l'avance les unes des autres ;
- il est prévu un élément (96) annulaire en forme de disque, qui recouvre du côté supérieur la pluralité d'évidements (100), en reposant sur le dispositif (38, 100) d'encliquetage, forme sur le pourtour intérieur une limitation de trajet du segment (92, 94) d'extrémité en forme de crochet vers l'extérieur et, en coopération avec la force de rappel du segment (84) de verrouillage, s'oppose, dans la position de repos, à un déverrouillage non soumis à une force de pression ;
- l'élément (34, 36) vissable a, dans la direction longitudinale et en correspondance à la forme en U du segment (92, 94) à l'extrémité en forme de crochet, un évidement faisant le tour en forme de cuvette, de réception du segment (92, 94) d'extrémité en forme de crochet, dans sa position de déverrouillage soumis à une force de pression et
- la surface extérieure de l'élément (34, 36) vissable est, dans la direction longitudinale, à distance d'un profil du côté intérieur du segment (84) de verrouillage, de manière à disposer de suffisamment de place pour la déviation du segment de verrouillage dans la position de déverrouillage soumis à la force de pression.

10. Agencement suivant la revendication 8 ou 9, **caractérisé en ce que** l'élément (34, 36) vissable a, du côté supérieur d'une manière centrée, une ouverture, de forme circulaire, de réception de la partie (82) annulaire, un diamètre de l'ouverture étant plus petit que le diamètre défini à l'avance de la partie (82) annulaire, en la position de repos, de manière à ce qu'une partie (82) annulaire, reçue dans l'ouverture, soit bloquée dans l'ouverture sans possibilité d'en tomber.

11. Agencement suivant l'une des revendications 8 à 10, **caractérisé en ce que** la profondeur de l'évidement dans la surface de l'élément (34, 36) vissable et le support à l'extrémité, se trouvant sur la partie (82) annulaire, de l'âme (86), sont en un agencement tel, que le segment (92, 94) d'extrémité en forme de crochet du dispositif (80) et la déformation (100) dans le segment (38, 100) d'encliquetage se correspondent en position dans la direction en hauteur.

12. Agencement suivant l'une des revendications 8 à 11, **caractérisé en ce que** la distance entre deux évidements (100) est choisie, de manière à ce que, dans un état non soumis à une force de pression, à partir d'une position d'extrémité qui a été atteinte de l'élément (34, 36) vissable, une extrémité (94) en forme de crochet, se trouvant entre deux évidement, pénètre, lors de l'action d'une force extérieure, automatiquement dans l'évidement (100) immédiatement suivant.

13. Agencement suivant l'une des revendications 8 à 12, **caractérisé en ce que** les évidements (100) sont répartis d'une manière équidistante sur le pourtour du dispositif (38) d'encliquetage.

14. Agencement suivant l'une des revendications 8 à 12, **caractérisé en ce que**, le long d'un pourtour du dispositif (38) d'encliquetage, la pluralité d'évidements est disposée d'une manière irrégulière, dans lequel, dans un segment du pourtour, dans lequel une position définie à l'avance de l'élément (32, 34) vissable se trouve, la distance entre deux évidements (100) voisins est plus petite que la distance entre deux évidements (100) voisins dans d'autres segments du pourtour.
